# EUROPEAN PATENT SPECIFICATION

(11) **EP 4 170 526 B1**
(45) Date of publication and mention of the grant of the patent: **11.02.2026**
(21) Application number: 22202268.3
(22) Date of filing: 18.10.2022
(51) Int. Cl.: G06F 21/32, H04L 9/40

(54) **AN AUTHENTICATION SYSTEM AND METHOD**
AUTHENTIFIZIERUNGSSYSTEM UND -VERFAHREN
SYSTÈME ET PROCÉDÉ D'AUTHENTIFICATION

(30) Priority: 19.10.2021 GB 202114905
(43) Date of publication of application: 26.04.2023
(73) Proprietor: ValidSoft Limited, Dublin 2, 662881 (IE)
(72) Inventor: PETERSEN, John, Dublin, 2 662881 (IE); CARROLL, Patrick Matthew, Dublin, 2 662881 (IE); KORFF, Alexander, Dublin, 2 662881 (IE)
(74) Representative: Marks & Clerk LLP

(56) References cited:
- WO-A1-2020/192890
- US-A1- 2005 273 626
- US-A1- 2019 122 670
- US-A1- 2021 320 801
- US-B1- 9 548 979

## Description

### FIELD

Embodiments described herein relate to an authentication system and an authentication method.

### BACKGROUND

An authentication method involves verifying that an assertion, such as a user identity, is true. Authentication methods are used in various fields, including healthcare and banking for example. A banking service provider may use an authentication method to protect access to an online account. A user may attempt to access the account by providing a username. An authentication method is then performed in order to verify that the user attempting to access the account corresponds to the registered user identified by the username. The user may be requested to speak some phrase, and a voice biometric analysis performed on the captured audio signal in order to authenticate the user. Authentication using voice biometrics can distinguish between a legitimate person and an imposter. In this example, the legitimate person is the person who owns the account and whose voice information is enrolled against that account. The voice biometric analysis involves comparing voice information extracted from the speech provided by the user with the stored voice information enrolled against the account. On determining that the voice information matches, the user is authenticated and allowed access to the account.

There is a continuing need for improved authentication methods and systems.

In United States Patent Application Publication US2019/122670A1 there is described a method in an audio data transmission module. The method comprises: obtaining an audio data stream comprising speech from a user to be authenticated, the audio data stream comprising a plurality of data segments; obtaining a voice biometric authentication result relating to the speech in one or more first data segments of the audio data stream; generating data-authentication data for one or more second data segments of the audio data stream; generating one or more cryptographically signed packets comprising the voice biometric authentication result and the data-authentication data; and outputting the one or more cryptographically signed packets.

In United States Patent Application Publication US2021/320801A1 there is described a method for verifying an individual's identity for granting access to a computer system that includes receiving a personal identifier of the individual and data related to the individual speaking an authentication sequence. The method includes performing a biometrics identity proof that includes: identifying a first set of characteristics from the data; retrieving, from a database, a second set characteristics linked to the personal identifier of the individual; and comparing the first set of characteristics against the second set of characteristics to determine a similarity score. The method includes performing a proof of possession of an authentication device that includes determining whether a recognized value of the authentication sequence matches an expected value of the authentication sequence. The method includes calculating a confidence score for verifying the individual's identity based the similarity score and whether a match was determined.

In International Patent Application Publication WO2020/192890A1 there is described a system including an interactive voice recognition module arranged to perform a speech conversation with a first user and receive a first user identifier, where the speech conversation has an interaction context based on a subject matter of the speech conversation. The system includes a datastore arranged to store a group of active words associated with the interaction context and store first user voiceprints derived from pre-captured audio of the first user, where each active word is selected based on one or more selection criterion derived from conversations of a population of users. An automated speech recognition module is arranged to perform speech recognition of the first user audio provided during the speech conversation. A voice biometric module is arranged to generate captured voiceprints and determine a similarity score based on comparisons of captured voiceprints with first user voiceprints.

In United States Patent US9548979B1 there are described methods and systems for enrolling a user in an authentication program. In some examples, voice interaction that includes a request or command is received from a user. The user may be requested to provide authentication information to fulfill the request or command made during the voice interaction. The user may be authenticated using a first authentication method. The user may be passively enrolled into an authentication program that uses a second authentication method. Enrolling may include deriving characteristics of the user's voice from the voice interaction. After the user is enrolled in the authentication program, the second authentication method may be used to authenticate the user prior to fulfilling requests or commands made during voice navigation.

In United States Patent Application Publication US2005/273626A1 there is described a portable device, such as a cellular telephone, that engages the user in a challenge-response sequence that is based on recognition of the user's utterance and also upon verification of the user's speech patterns or voiceprint. The challenge-response protocol presents the user with an unexpected challenge word, which the user is then requested to respond to. The system maintains a secure data store of challenge words which it adapts and augments as the user makes use of the portable device.

### BRIEF DESCRIPTION OF FIGURES

Systems and methods in accordance with non-limiting embodiments will now be described with reference to the accompanying figures in which:
Figure 1(a) is a schematic illustration of an example audio signal;
Figure 1(b) shows a schematic illustration of a voice biometric score;
Figure 2(a) is a flow chart illustrating an authentication method according to an embodiment;
Figure 2(b) shows a schematic illustration of an example audio signal;
Figure 2(c) is a schematic illustration of a method which may be performed in an authentication method according to an embodiment;
Figure 3 is a schematic illustration of an authentication method according to an embodiment;
Figure 4(a) is a flow chart illustrating an authentication method according to an embodiment;
Figure 4(b) is a schematic illustration of an authentication method according to an embodiment;
Figure 5 is a schematic illustration of an authentication system in accordance with an embodiment.

### DETAILED DESCRIPTION

According to a first aspect, there is provided a computer implemented method, comprising:
receiving a first audio signal;
identifying one or more portions of the first audio signal as corresponding to one or more pre-determined text sequences;
identifying one or more portions of the first audio signal as corresponding to one or more new text sequences;
performing a voice authentication on a first portion of the first audio signal identified as corresponding to a first pre-determined text sequence and performing a separate voice authentication on a second portion of the first audio signal identified as corresponding to a new text sequence.

In one example, the voice authentication performed on the first portion uses a stored voice template, and wherein the stored voice template corresponds to the first pre-determined text sequence.

In one example, identifying the first portion comprises:
performing an automatic speech recognition process taking the first audio signal as input and generating output text;
identifying a part of the output text comprising the first pre-determined text sequence;
identifying a portion of the first audio signal corresponding to the part of the output text as the first portion.

In one example, identifying the one or more portions of the first audio signal as corresponding to one or more new text sequences comprises selecting one or more remaining portions of the first audio signal after the identification of one or more portions of the first audio signal as corresponding to the one or more pre-determined text sequences.

In one example, the method further comprises:
obtaining a first new text sequence;
performing an automatic speech recognition process taking the first audio signal as input and generating output text; and
performing a determination as to whether the output text comprises the first new text sequence.

In one example, the method further comprises:
receiving a first authentication request;
obtaining a first new text sequence in response to the received first authentication request; and
providing a first requested text, the first requested text comprising the first new text sequence.

In one example, the method further comprises:
receiving a second authentication request;
obtaining a second new text sequence in response to the received second authentication request, wherein the second new text sequence is different to the first new text sequence;
providing a second requested text, the second requested text comprising the second new text sequence;
receiving a second audio signal;
identifying one or more portions of the second audio signal as corresponding to the one or more pre-determined text sequences;
identifying a second portion of the first audio signal as corresponding to the second new text sequence; and
performing a voice authentication on a first portion of the first audio signal identified as corresponding to the first pre-determined text sequence and performing a separate voice authentication on the second portion of the first audio signal.

In one example, the first pre-determined text sequence comprises more syllables than the first new text sequence.

In one example, the first authentication request identifies a stored voice template, wherein the method further comprises:
retrieving the first pre-determined text sequence, wherein the first pre-determined text sequence corresponds to the stored voice template, wherein the first requested text further comprises the first pre-determined text sequence.

In one example, the one or more portions are identified as corresponding to the one or more pre-determined text sequences using one or more time periods corresponding to an expected time for speaking the one or more pre-determined text sequences.

In one example, the method further comprises:
performing a determination as to whether speech in the first portion of the audio signal is computer-generated.

In one example, the method further comprises:
performing a determination as to whether speech in the first portion of the audio signal is generated by replaying a recording.

In one example, the method further comprises:
performing a separate determination as to whether speech in the first portion of the audio signal is generated by replaying a recording and whether speech in the second portion of the audio signal is generated by replaying a recording; and
performing a separate determination as to whether speech in the first portion of the audio signal is computer-generated and whether speech in the second portion of the audio signal is computer-generated.

According to another aspect, there is provided a computer readable medium comprising computer executable instructions that when executed by a computer will cause the computer to carry out a method according to any of the above methods.

According to another aspect, there is provided an authentication system, comprising:
one or more processors, the one or more processors configured to:
receive a first audio signal;
identify one or more portions of the first audio signal as corresponding to one or more pre-determined text sequences;
identify one or more portions of the first audio signal as corresponding to one or more new text sequences;
perform a voice authentication on a first portion of the first audio signal identified as corresponding to a first pre-determined text sequence and perform a separate voice authentication on a second portion of the first audio signal identified as corresponding to a new text sequence.

The methods are computer-implemented methods. Since some methods in accordance with embodiments can be implemented by software, some embodiments encompass computer code provided on any suitable carrier medium. The carrier medium can comprise any storage medium such as a CD ROM, a magnetic device or a programmable memory device, or any transient medium such as any signal e.g. an electrical, optical or microwave signal. The carrier medium may comprise a non-transitory computer readable storage medium.

Voice biometric authentication can determine whether an audio signal corresponds to speech spoken by a legitimate person, where the legitimate person is the person who owns the claimed identity and whose voice print is enrolled against that identity. A voice biometric authentication method may comprise receiving an authentication request corresponding to a user, the request comprising information specifying the claimed identity. This information might be a username identifying a registered person for example. This information is then used to retrieve a stored template, or voice print, corresponding to the identity claimed by the user.

The user is then requested to speak, and an audio signal received. The voice biometric analysis may be text dependent, in which case a specific phrase is requested to be spoken, for example "Please authenticate me with my voice". Voice information is extracted from the audio signal and compared to the stored template. The voice information may comprise information specifying various characteristics of the user voice, such as pitch, cadence, tone, pronunciation, emphasis, speed of speech, and accent. The unique vocal tract and behaviour of each person results in distinct voice information that allows verification of the person using the stored template. For a text dependent voice biometric analysis, the specific requested phrase is the same as that which was used during enrolment of the user to generate the stored voice template. Using the same specific phrase during enrolment and during authentication allows for greater accuracy and chance of successful authentication. For a system using text dependent voice biometric analysis, an additional authentication step can also be performed using phrase assurance, whereby the authentication is failed if the audio is not recognised as the correct phrase, regardless of the biometric score. In a text independent voice biometric analysis, in which the user can speak a different text during authentication to that used during enrolment, more audio is required in order to obtain the same level of accuracy.

A first method which can be used to attempt to deceive a voice biometric based authentication method is a replay attack. This involves an imposter obtaining a recording of the legitimate person's voice and replaying the recording through a microphone to provide the audio signal. A second method which is used to attempt to deceive a voice biometric based authentication is a synthesis attack. A synthesis attack uses an algorithm, such as a trained text to speech model, to provide computer generated speech that simulates the legitimate user's voice. For a text dependent voice biometric analysis, to increase the chance that the attack is successful, the recorded or synthesised speech would need to be of the actual phrase requested by the biometric engine - "Please authenticate me with my voice" in the example above.

The authentication method may comprise replay and synthesis detection functionality to protect against these attacks. Such functionality is configured to detect when an audio signal is not being spoken by a live human. This replay and synthesis detection functionality may not always be successful however. For example, the highest quality synthetically generated speech may not always be detected as synthetic speech.

Another technique which may be used as part of an authentication process in addition to replay and synthesis detection is "liveness" detection. A liveness detection process comprises the system requesting a phrase which comprises some content which is specific to the individual request, for example some newly generated content. For example the requested phrase may comprise a set of digits which are randomly generated by the system each time authentication is performed. In this case, the requested phrase might be "Please authenticate me with my voice using 298653", where the digits 298653 are generated by the system specifically for that request. A new set of digits is generated for each request. In this way, the system can intersperse or add a level of randomness to the requested text phrase. Since the digits are randomly generated for each request, any previously recorded phrase used by an imposter will have different digits. The phrase might pass the biometric voice authentication, and also the replay and synthesis detection in some cases. However, using automatic speech recognition, the system can detect that the digits "spoken" are not those that were requested. It would therefore fail the "liveness" detection, and be detected as a fake. During enrolment, the user is requested to repeatedly speak the same phrase using different digits. Since part of the phrase requested during authentication is the same as part of the phrase used to generate the voice template during enrolment, greater accuracy of the voice biometric authentication is still obtained compared to a case where the same amount of only newly generated content is requested.

An attack which can be used to attempt to deceive such an authentication method involves an imposter playing a recorded or synthetic "static" component of the requested phrase, but speaking the "dynamic" portion themselves. The "static" part corresponds to the pre-determined text which is the same for multiple requests. The static part is "Please authenticate me with my voice using" in the above example. The dynamic part is the new part of the requested text that is generated specifically for each request - this part is different between different requests. The dynamic part is "298653" in the above example. By playing a recorded or synthesised "static" portion, and speaking the "dynamic" part of the text, the imposter can ensure that the correct dynamic text is received, thus passing the liveness test. Furthermore, because a live person spoke a portion of the phrase, replay and synthesis detection are more likely to be fooled. Since the static portion of the audio signal contains a recorded voice of the genuine user, or a voice which is synthetically generated to be similar to the genuine user, the static portion could pass the biometric authentication threshold. Depending on the amount of recorded or synthesised audio versus spoken audio, the combined phrase, including the imposter's voice, may well pass the biometric authentication threshold as well.

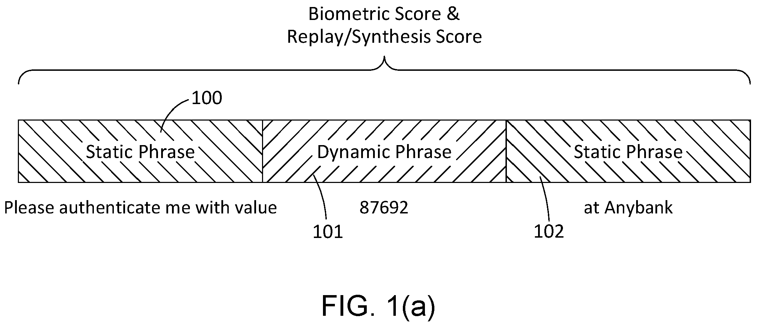

Figure 1(a) is a schematic illustration of an example audio signal comprising a first portion 100, which corresponds to the static requested text "Please authenticate me with value", followed by a second portion 101, which corresponds to the dynamic requested text "87692", followed by a third portion 102, which corresponds to the static requested text "at Anybank". The audio signal corresponds to a phrase comprising two static components interspersed with a dynamic component. The audio signal is processed by an authentication system. Voice biometric analysis compares voice information extracted from the entire audio signal against a stored template, to provide a voice biometric score indicating the likelihood that the audio signal corresponds to the stored voice template. The authentication system also analyses the entire audio signal to determine a likelihood that the audio signal corresponds to replayed recorded speech, and to determine a likelihood that the audio signal corresponds to synthesised speech. The authentication system also analyses the entire audio signal to determine a likelihood that the words spoken correspond to the requested text. For example, as well as being biometrically assessed, the audio signal corresponding to the entire phrase is parsed by a speech recognition engine looking for the correct digit combination of 87692. The results of these assessments are combined to provide a final authentication result. A single combined assessment is performed on the entire audio signal.

An imposter may provide a pre-recorded first portion 100 and a pre-recorded third portion 102, whilst speaking the second portion 101. In other words, an imposter may use replay recordings for the static components, with the imposter speaking the digits. Such a signal may result in a positive authentication, since including the pre-recorded sections results in a high voice biometric score, whilst including the spoken portions results in a high liveness detection score for example. In particular, since the audio signal corresponding to the requested phrase is processed in its entirety for replay, synthesis and biometric authentication, the resultant score is based on a combination of all the audio.

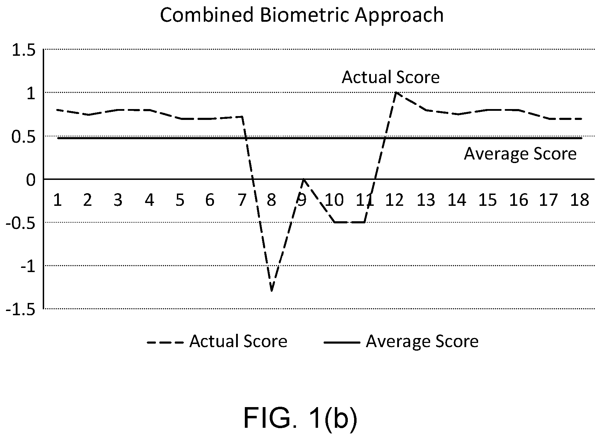

Figure 1(b) shows a schematic illustration of how the combined biometric score might look if scoring continually throughout the audio signal shown in Figure 1(a). Figure 1(b) shows the potential biometric scoring along with the average score across the entire phrase. As explained above, the phrase is generated using a combination of replaying a recording of the registered user, with the imposter speaking the digits. As shown, the second portion 101 of the audio signal would be expected to correspond to a lower biometric score. When the audio signal is evaluated as a whole however, which can be considered as an "average" score, depending on the biometric score threshold used to determine whether the signal is authenticated, the combination of the replay recording and the imposter speaking may be successful in being authenticated by the system. In other words, the "average" score may be above the authentication threshold, leading to a positive authentication.

Embodiments described herein can provide improved authentication, which is robust to imposter attacks based on a combination of spoken and replayed speech for example. An authentication method comprises receiving an audio signal from the user. One or more portions of the audio signal are identified as corresponding to one or more pre-determined text sequences. In this example, one portion of the audio signal is identified as corresponding to a first pre-determined text sequence "Please authenticate me with value" - this is referred to as a first portion. Another portion of the audio signal is identified as corresponding to a second pre-determined text sequence "at Anybank" - this is referred to as a third portion. One or more portions of the audio signal are identified as corresponding to one or more new text sequences. In this example, the new text sequence is "87692" and there is a single portion corresponding to the new text sequence. This is identified as the dynamic portion, and is also referred to here as the second portion. Voice biometric authentication is performed on the second portion of the audio signal, separately to the rest of the audio signal. In other words, voice information is extracted from the second portion of the audio signal independently of the rest of the audio signal, and this is used for voice biometric authentication. Evaluating a dynamic component of the audio signal independently avoids an "averaging" of the voice information for two or more voices for example.

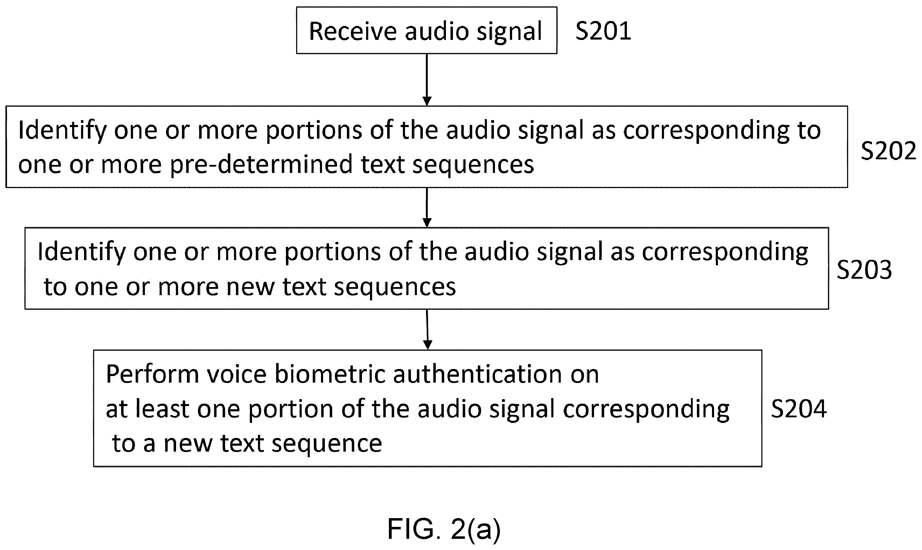

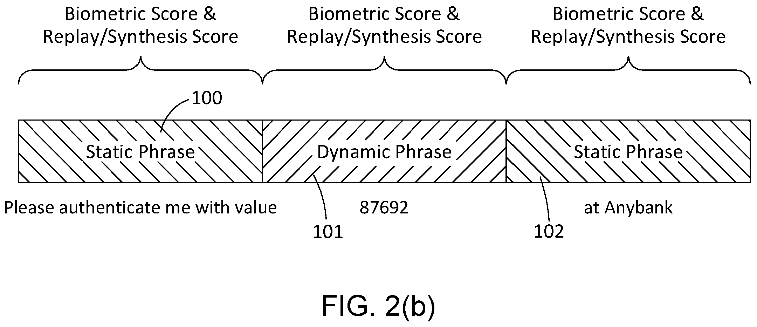

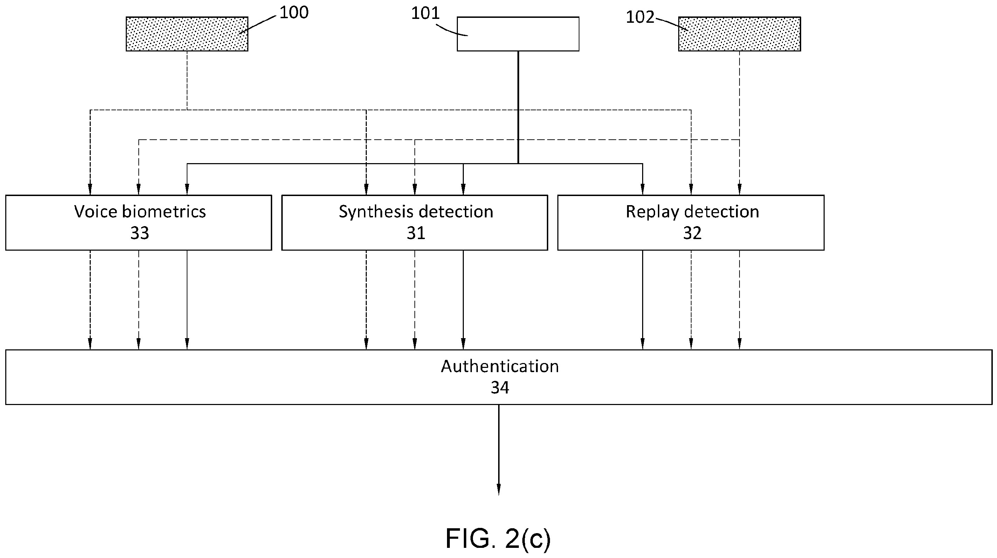

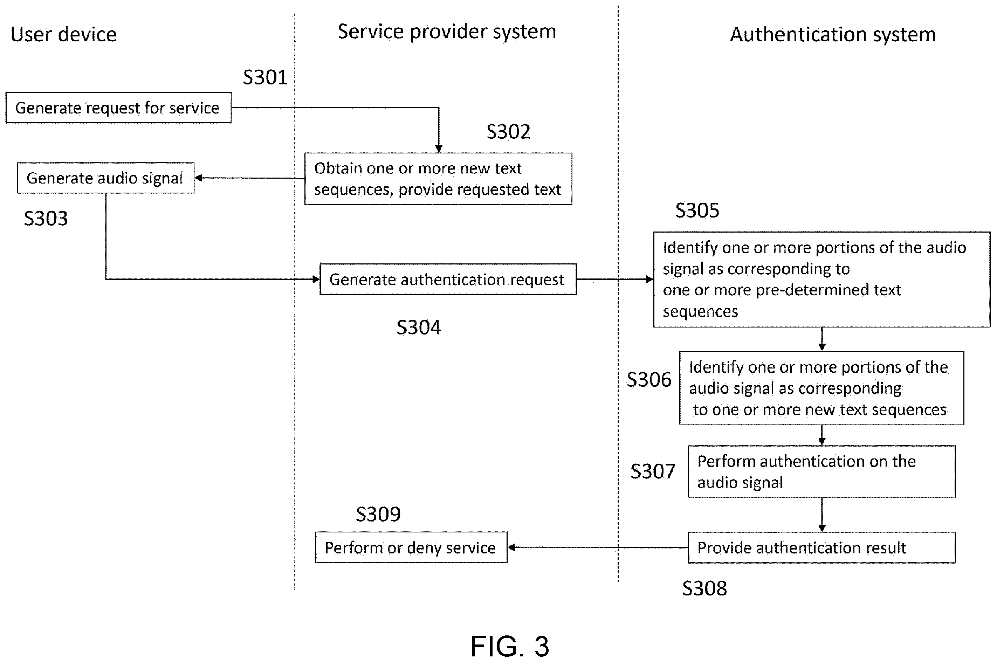

In a first example described in relation to Figures 2 and 3 below, an authentication method is performed in which the one or more new text sequences are not provided to the authentication system.

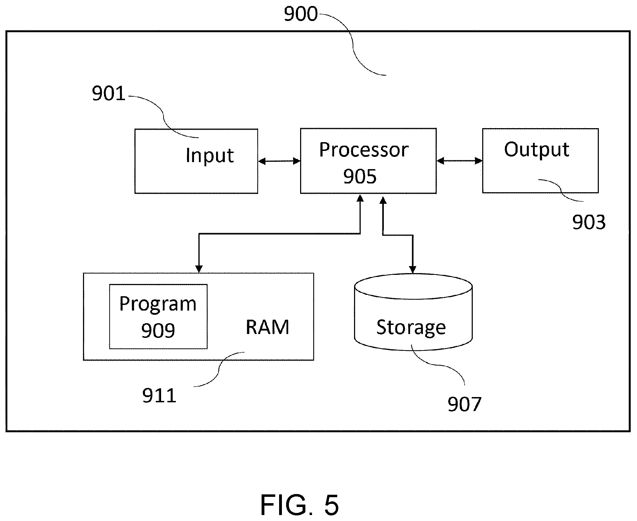

Figure 2(a) is a flow chart illustrating an authentication method according to an embodiment. The authentication method may be performed on a system such as described in relation to Figure 5 for example. The method uses a plurality of stored templates, also referred to as voice prints, corresponding to registered persons. In this example, the templates are associated with the text "Please authenticate me with value .... at Anybank". The text comprises a first part comprising a first pre-determined text sequence "Please authenticate me with value", a second part which will correspond to the new text sequence, in this example a sequence of random values, and a third part comprising a second pre-determined text sequence "at Anybank". The authentication system stores the pre-determined text sequences and the order of the parts. The authentication system also stores a single voice template associated with the entire text "Please authenticate me with value .... at Anybank" for the registered user for example.

In S201, an audio signal is received, together with information specifying an identity. The authentication method is performed in order to determine whether the audio signal corresponds to the specified identity. The information specifying an identity might be a username, name or alphanumeric code identifying a registered person for example. This information is used to retrieve the one or more stored voice templates associated with the identified person.

In S202, one or more portions of the audio signal are identified as corresponding to one or more pre-determined text sequences. In this example, a first pre-determined text sequence is "Please authenticate me with value" and a second pre-determined text sequence is "at Anybank". In S202, the audio signal is analysed to identify a portion that corresponds to the first pre-determined text sequence - this portion will be referred to as the first portion. The audio signal is also analysed to identify a portion that corresponds to the second pre-determined text sequence - this portion will be referred to as the third portion. In other words, the audio signal is analysed to identify a first portion of the audio signal in which the first pre-determined text sequence is spoken and a third portion of the audio signal in which the second pre-determined text sequence is spoken. A portion of the audio signal is identified for each pre-determined text sequence associated with the identified voice template for the user in this step.

In this example, the one or more portions of the audio signal are identified using a speech recognition based method. For example, a trained speech recognition algorithm based on a neural network or Hidden Markov Model may be used in S202. The audio signal is taken as input to the ASR module. The ASR output may comprise the most probable text hypothesis corresponding to the audio signal. Timing information corresponding to the point in the audio signal corresponding to the start and end of each word in the hypothesis is also generated by the automatic speech recognition algorithm.

This timing information is used to identify the one or more portions of the audio signal corresponding to the one or more pre-determined text sequences. In this example, the timing information is used to identify the end of the first portion 100 in the audio signal. The end of the first portion 100 corresponds to the point in the audio signal identified in the timing information as the end of the final word in the first pre-determined text sequence. The portion of the audio signal from the start of the audio signal to this point is identified as the first portion 100. The timing information is also used to identify the start of the third portion 102 in the audio signal. The start of the third portion 102 corresponds to the point in the audio signal identified in the timing information as the start of the first word in the second pre-determined text sequence. The portion of the audio signal from this point to the end of the audio signal is identified as the third portion 102.

In this example, automatic speech recognition is used for identifying the different portions. However, alternative methods may be used to identify the portions in S202, as will be described in more detail below.

In S203, one or more portions of the audio signal corresponding to one or more new text sequences are identified. In the first example, the one or more remaining portions of the audio signal are identified in this step. In this example, a second portion of the audio signal is identified as the portion of the audio signal between the first portion 100 and the third portion 102. It is known where the static and dynamic components are in the requested text phrase, in other words the order of these components is known. In this example, the text comprises a first part comprising a first pre-determined text sequence "Please authenticate me with value", a second part comprising a dynamic sequence of values, and a third part comprising a second pre-determined text sequence "at Anybank". The portion of the audio signal corresponding to the dynamic part of the requested text is therefore identified as the part of the audio signal between the first portion and the third portion which were identified in S202.

Using ASR, the phrase can therefore be broken into the three separate portions - the portion corresponding to the first pre-determined text sequence, the portion corresponding to the second pre-determined text sequence, and the remaining portion, which will correspond to the dynamic text.

Alternatively, the one or more portions of the audio signal corresponding to one or more new text sequences are identified based on a known structure of the one or more new text sequences. In this case, the second portion could be identified by searching for a sequence of digits in the ASR output for example.

S202 and S203 comprise "chunking" the audio signal into smaller frame sets for analysis. Figure 2(b) shows a schematic illustration of the example audio signal. The audio signal comprises a first portion 100, which corresponds to the static requested text "Please authenticate me with value", a second portion 101, which corresponds to the dynamic requested text "87692", and a third portion, which corresponds to the static requested text "at Anybank". These portions are identified in S202 and S203 using automatic speech recognition, as described above.

In S204, voice biometric authentication is performed on one or more portions of the audio signal identified in S203 as corresponding to one or more new text sequences. In this example, voice information extracted from just the second portion 101 of the audio signal (which was identified in S203) is analysed against a stored template, to provide a voice biometric score indicating the likelihood that the second portion 101 of the audio signal corresponds to the stored template. The stored template is identified by the information provided in the authentication request. A higher voice biometric score indicates that the second portion 101 of the audio signal is more likely to correspond to the stored voice print. The score is then compared to a threshold value. The threshold value may be a fixed pre-determined value. The threshold can be determined via a tuning process performed prior to deployment of the system for example. If the biometric score for the second portion does not meet the threshold, the authentication fails.

By performing independent biometric analysis of the second portion 101 of the audio signal, it can be determined whether the second portion 101, corresponding to the dynamic part of the requested text, is spoken by a human imposter. An authentication process which is robust to imposter attacks based on a combination of spoken and replayed speech for example is therefore provided.

Figure 2(c) is a schematic illustration of a method which may be performed in S204 of the method described in relation to Figure 2(a) above, according to an embodiment.

As described above, in S204 the second portion 101 of the audio signal is analysed to provide a voice biometric score. The analysis is performed by a voice biometrics module 33. The voice biometrics module 33 comprises an algorithm that generates a digital representation of the distortion of sound caused by the speaker's physiology from an audio signal. This representation comprises a series of values, representing voice information. The values may be represented as float values, which are stored in a vector, referred to here as a voice information vector. The voice information comprises information specifying various characteristics of the user voice, such as pitch, cadence, tone, pronunciation, emphasis, speed of speech, and accent. The unique vocal tract and behaviour of each person results in distinct voice information that allows verification of the person using the stored template. The stored template is a vector comprising a set of values which were previously extracted from speech received from the registered user.

The second portion 101 of the audio signal is taken as input to the algorithm. The voice information generated for the second portion 101 of the audio signal is then compared to the stored voice information corresponding to the identified user to generate a voice biometric score. The score is a single value indicating the similarity between the stored template voice information vector of values and the voice information vector extracted from the second portion 101 of the audio signal, with a higher score indicating higher similarity between the vectors.

The score is then compared to the threshold value as described above. If the biometric score for the second portion 101 does not meet the threshold, then the voice biometrics module 33 outputs an indication that the authentication should fail to the authentication module 34. This might be a 0 value for example. If the biometric score for the second portion 101 does meet the threshold, then the voice biometrics module 33 outputs an indication that the check has been successful to the authentication module 34. This might be a 1 value for example.

The authentication step S204 further comprises performing independent voice biometric analysis on the first portion 100 of the audio signal. The first portion 100 of the audio signal is taken separately as input to the voice biometrics module 33. Voice information extracted from just the first portion 100 of the audio signal is analysed against the stored template by the voice biometrics module 33, to provide a voice biometric score indicating the likelihood that the first portion 100 of the audio signal corresponds to the stored template. If the biometric score for the first portion 100 does not meet the threshold, the voice biometrics module 33 outputs information indicating that the authentication should fail, for example a 0 value. If the biometric score for the first portion 100 does meet the threshold, the voice biometrics module 33 outputs information indicating that this check has been successful, for example a 1 value.

In this example, the authentication step S204 further comprises performing independent voice biometric analysis on the third portion 102 of the audio signal. The third portion 102 of the audio signal is taken separately as input to the voice biometrics module 33. Voice information extracted from just the third portion 102 of the audio signal is analysed against the stored template, to provide a voice biometric score indicating the likelihood that the third portion 102 of the audio signal corresponds to the stored template. If the biometric score for the third portion 102 does not meet the threshold, the voice biometrics module 33 outputs information indicating that the authentication should fail, for example a 0 value. If the biometric score for the third portion 102 does meet the threshold, the voice biometrics module 33 outputs information indicating that this check has been successful, for example a 1 value.

In this manner, an authentication technique is provided which evaluates static and dynamic components of the audio signal independently of each other. Each component part of the audio signal is evaluated for biometric authentication. In this way, if any portion fails, the authentication fails. By performing independent analysis of various segments of a spoken phrase, it can be determined whether the same speaker is speaking the entire phrase, or whether any or all of the phrase is spoken by a human imposter.

In this example, S204 further comprises analysing the first portion 100 of the audio signal independently to determine a likelihood that the first portion 100 of the audio signal corresponds to replayed recorded speech. This analysis is performed by a replay detection module 32. If the replay detection module 32 determines that the first portion 100 corresponds to a replay of a recording, the replay detection module 32 outputs information indicating that the authentication should fail, for example a 0 value, to the authentication module 34. If the replay detection module 32 determines that the first portion 100 does not correspond to a replay of a recording, the replay detection module 32 outputs information indicating that this check has been successful, for example a 1 value. In this example, S204 further comprises analysing the third portion 102 of the audio signal independently to determine a likelihood that the third portion 102 of the audio signal corresponds to replayed recorded speech. This analysis is again performed by the replay detection module 32. If the replay detection module 32 determines that the third portion 102 corresponds to a replay of a recording, the replay detection module 32 outputs information indicating that the authentication should fail, for example a 0 value. If the replay detection module 32 determines that the third portion 102 does not correspond to a replay of a recording, the replay detection module 32 outputs information indicating that this check has been successful, for example a 1 value. In this example, S204 further comprises analysing the second portion 101 of the audio signal independently to determine a likelihood that the second portion of the audio signal corresponds to replayed recorded speech. This analysis is again performed by the replay detection module 32. If the replay detection module 32 determines that the second portion 101 corresponds to a replay of a recording, the replay detection module 32 outputs information indicating that the authentication should fail, for example a 0 value. If the replay detection module 32 determines that the second portion 101 does not correspond to a replay of a recording, the replay detection module 32 outputs information indicating that this check has been successful, for example a 1 value.

Various methods of determining whether an audio signal corresponds to a replayed recording may be used by the replay detection module 32. For example, the replay detection module 32 may comprise a trained binary classification model that has been trained to classify whether an audio stream comprises a replay of a recording. Such a model may take as input a set of features extracted from the audio, and be trained on datasets comprising sets of features extracted from many audio signals generated by replaying a voice recording and many audio signals corresponding to live human speech. The input set of features may comprise some or all of the same voice information extracted by the voice biometrics module 33 for example. The replay detection module 32 may generate a score indicating the likelihood that the audio corresponds to a replay of a recording. This score is then compared to a threshold. If the replay detection score for any component does not meet the threshold, the authentication fails. The score may be a value from 0 to 1, and the threshold may be 0.5 for example. Other methods of replay detection may be used in this step.

The replay detection module 32 is shown in Figure 2(c) as a separate component from the voice biometrics module 33. However, there may be overlap between the functionality performed by the voice biometric analysis and the replay detection analysis, and therefore in some examples, a combined analysis is performed. For example, the voice biometrics module 33 may perform the function of the replay detection module 32. The replay detection may be performed by identifying anomalies in the digital representation that is generated as part of the voice biometrics analysis (the voice information vector). Anomalies that arise from use of a recording device can be detected in this representation.

The method performed in S204 evaluates each portion of the audio signal for replay detection. If any singular component is detected as replay the authentication fails. By performing independent analysis of the portions of the audio signal, it can be determined whether any or all of the phrase is a replay of a recording.

In this example, S204 further comprises analysing the first portion 100 of the audio signal independently to determine a likelihood that the first portion 100 of the audio signal corresponds to computer synthesised speech. This analysis is performed by a synthesis detection module 31. If the synthesis detection module 31 determines that the first portion 100 corresponds to synthesised speech, the synthesis detection module 31 outputs information indicating that the authentication should fail, for example a 0 value, to the authentication module 34. If the synthesis detection module 31 determines that the first portion 100 does not correspond to synthesised speech, the synthesis detection module 31 outputs information indicating that this check has been successful, for example a 1 value. In this example, S204 further comprises analysing the third portion 102 of the audio signal independently to determine a likelihood that the third portion 102 of the audio signal corresponds to computer synthesised speech. This analysis is performed by the synthesis detection module 31. If the synthesis detection module 31 determines that the third portion 101 corresponds to synthesised speech, the synthesis detection module 31 outputs information indicating that the authentication should fail, for example a 0 value, to the authentication module 34. If the synthesis detection module 31 determines that the third portion 102 does not correspond to synthesised speech, the synthesis detection module 31 outputs information indicating that this check has been successful, for example a 1 value. In this example, S204 further comprises analysing the second portion 101 of the audio signal independently to determine a likelihood that the second portion of the audio signal corresponds to computer synthesised speech. This analysis is performed by the synthesis detection module 31. If the synthesis detection module 31 determines that the second portion 101 corresponds to synthesised speech, the synthesis detection module 31 outputs information indicating that the authentication should fail, for example a 0 value, to the authentication module 34. If the synthesis detection module 31 determines that the second portion 101 does not correspond to synthesised speech, the synthesis detection module 31 outputs information indicating that this check has been successful, for example a 1 value.

Various methods of determining whether an audio signal comprises computer generated speech can be used by the synthesis detection module 31. For example, the synthesis detection module 31 may comprise a trained binary classifier model that has been trained to classify whether an audio stream comprises synthesised speech or whether it is provided by a human speaker. Such a model may take as input a set of features extracted from the audio, and be trained on datasets comprising sets of features extracted from many audio signals generated by a text to speech algorithm and many audio signals corresponding to live human speech. The input set of features may comprise some or all of the same voice information extracted by the voice biometrics module 33 for example. The synthesis detection module 31 may generate a score indicating the likelihood that the audio corresponds to synthesised speech. This score is then compared to a threshold. If the synthesis detection score for any component does not meet the threshold, the authentication fails. The score may be a value from 0 to 1, and the threshold may be 0.5 for example. Other methods of synthesis detection can be used in this step.

The synthesis detection module 31 is shown in Figure 2(c) as a separate component from the voice biometrics module 33 and from the replay detection module 32. However, there may be overlap in the functionality performed by the voice biometric analysis and the synthesis detection analysis, and/or by the replay detection analysis and the synthesis detection analysis. In some examples, a combined analysis is performed. For example, the voice biometrics module 33 may perform the function of the synthesis detection module 31.

The method evaluates each portion of the audio signal for synthesised speech detection. If any singular component is detected as synthesised speech the authentication fails. By performing independent analysis of the portions, it can be determined whether any or all of the phrase is synthetically generated.

An authentication technique is provided which evaluates static and dynamic components of the audio signal independently of each other. Each component is evaluated for biometric authentication, replay detection and synthesis detection. If any singular component is detected as replay or synthetic the authentication fails. By performing independent analysis of various segments of a spoken phrase, it can be determined whether the same speaker is speaking the entire phrase, whether any or all of the phrase is spoken by a human imposter, whether any or all of the phrase is a replay of a recording and whether any or all of the phrase is computer generated speech. The method performs static and dynamic speech separation for voice biometric analysis. Independent evaluation of each component of the phrase is performed.

The outputs of each of the voice biometrics module 33, synthesis detection module 31, and replay detection module 32 are provided to an authentication module 34.

If any of the outputs indicate that the authentication should fail, the authentication module 34 outputs an indication that the authentication has failed. For example, if any of the outputs is a 0 value, the authentication module 34 determines that the authentication has failed. If the authentication fails, a message may be transmitted to a further system, for example a service provider system, informing that the authentication has failed. Further steps which have been requested by the user are then not performed by the service provider system. For example, where the user has requested access to an account, if the authentication fails, the system does not provide the user with access. A message may also be transmitted to the user indicating that the authentication has failed.

If all of the portions of the audio signal meet the respective thresholds for each of the voice biometric analysis, the replay detection and the synthesis detection then the user is authenticated. If all of the outputs indicate that the authentication should proceed, the authentication module 34 outputs an indication that the authentication has succeeded. For example, if all of the outputs are 1 values, the authentication module 34 determines that the authentication has succeeded. If the authentication succeeds, a message may be transmitted to a further system, for example a service provider system, informing that the authentication has succeeded.

In the above described example, a method of replay detection is performed, to determine a likelihood that a portion of the audio signal is a replay of a recording. In alternative examples however, the replay detection is omitted. In other examples, the replay detection may be performed on one or more portions of the audio signal only, or some combination of these. For example, the replay detection may be performed on the first portion 100 of the audio signal and/or the third portion 102 of the audio signal only. Since an imposter is more likely to use a replay of a recording for the static parts of the requested text, performing the replay detection on the static portions of the audio signal only may provide robust authentication, with reduced processing to be performed.

In the above described examples, a method of synthesis detection is performed, to determine a likelihood that a portion of the audio signal is synthetically generated speech. In alternative examples however, the synthesis detection is omitted. In other examples, the synthesis detection may be performed on one or more portions of the audio signal only, or some combination of these. For example, the synthesis detection may be performed on the first portion 100 of the audio signal and/or the third portion 102 of the audio signal only. Since an imposter is more likely to use synthesised speech for the static parts of the requested text, performing the synthesis detection on the static portions of the audio signal only may provide robust authentication, with reduced processing to be performed.

In the above described example, automatic speech recognition is used for identifying the portions of the audio signal in S202. In an alternative example however, time delimiting may be used for identifying the portions of the audio signal in S202. Since it is known where the static and dynamic components are in the requested phrase, and how long the static components take to speak, time delimiting can be used for identifying the different components. In this example, it is known where the second part, first part and third part are in the requested text, in other words the order of these parts is known. It can also be determined how long the first and third parts take to speak. Time delimiting is then performed on the audio signal to identify the respective portions. For the static parts (the first part and third part), the expected time it takes to speak the text may be determined in advance of performing the authentication method and stored for use during the authentication method. Since the static text is the same for every request, the same expected time can be used to identify the static portion(s) for every received audio signal. For example, an average time to speak the first pre-determined text sequence in the first part of the requested text may be determined from the audio signals provided by the user during the enrolment process. This length of time is then stored as the expected time for the first part of the requested text. A similar process can be performed for the third part. For example, the first part of the request text may take on average 2.25 seconds to speak and the third part of the requested text may take on average 1 second to speak. These expected time lengths are stored in the authentication system. When an input audio signal is received during a method of authentication, the first 2.25 seconds of the audio signal are extracted as the first portion of the signal and the final 1 second of the audio signal is extracted as the third portion of the signal in S202. The remaining section of the audio signal is identified as the second portion, which is the dynamic portion of the signal, in S203.

Figure 3 is a schematic illustration of a method of authentication according to an embodiment, in which a user is authenticated prior to providing access to an online banking account. The method is performed by a system comprising a user device, a service provider system and an authentication system. In this example, the user device is a computing device, such as a smart phone or a computer for example, which transmits signals to the service provider system via a communication network such as the Internet. The service provider system comprises a server. In this example, the service provider system is a provider of a banking service. The authentication system comprises a separate server, where data is transmitted between the service provider system and the authentication system via a communication network such as the Internet.

Prior to performance of the method described in relation to Figure 3, the user registers with the service provider. During the registration process, the service provider requests the user to speak the phrase "Please authenticate me with value ...... at Anybank" multiple times, with a different set of digits in the location "....." each time. For example, the user may speak the phrase three or four times, with the digits changed each time. These audio signals are transmitted to the service provider from the user device, for example through a web-browser or app, by calling a specified telephone number or by sending a voice message to a specified telephone number. These audio signals are then sent from the service provider to the authentication system together with a username. Alternatively, the user may provide the audio signals directly to the authentication system. The authentication system generates a voice template based on the received set of audio signals, and stores the voice template together with the username.

The requested text comprises one or more static parts and one or more dynamic parts. The combined static parts may comprise more syllables than the combined dynamic parts. In one example, the combined static parts comprise greater than 1.5 times more syllables than the combined dynamic parts. In one example, the combined static parts comprise greater than 2 times more syllables than the combined dynamic parts. In this example, the text comprises a first part which is a static part and corresponds to a first pre-determined text sequence "Please authenticate me with value", a second part which is a dynamic part and corresponds to a sequence of five digits, and a third part which is a dynamic part and corresponds to a second pre-determined text sequence "at Anybank". The authentication system also stores the first pre-determined text sequence, the second pre-determined text sequence and the order of the static and dynamic parts. This information may be provided to the authentication system by the service provider system, or the authentication system may extract this information from the received audio signals using ASR for example.

In the following method, a user is then authenticated prior to providing access to an online banking account managed by the service provider system. In S301, a request for a service is generated at the user device. In this example, the user uses the user device to request access to their bank account online through a web-based portal. The user accesses the portal in a web browser running on the user device and inputs their username. The request for a service including the username is transmitted to the service provider system.

In S302 the service provider system obtains one or more new text sequences, which in this example is a randomly generated sequence of five digits. The one or more new text sequences may have the same structure as the one or more new text sequences used to generate the voice template. For example, where a new text sequence comprising a sequence of five digits is used during enrolment, the new text sequence generated in S302 comprises a sequence of five digits. The new text sequence generated in S302 may have the same number of characters as the new text sequences used to generate the voice template for example. The characters may be the same type of characters. The new text sequence is a "dynamic" part, which is specific to the authentication request. In this example, a set of digits are randomly generated, where a new set of digits is randomly generated for each received request. The digits may therefore be different between different requests. In this example, the new text sequence is "87692".

The requested text is generated comprising the one or more pre-determined text sequences and the one or more new text sequences. The combined pre-determined text sequences may comprise more syllables than the combined new text sequences. In one example, the combined pre-determined text sequences comprise greater than 1.5 times more syllables than the combined new text sequences. In one example, the combined pre-determined text sequences comprise greater than 2 times more syllables than the combined pre-determined text sequences. The requested text sequence in this example is "Please authenticate me with value 87692 at Anybank". Information identifying the requested text is then provided to the user. In this example, the requested text comprises the second part, which is a dynamic part, comprising the set of digits which is the new text sequence. The requested text also comprises a first part which is a static part and a third part which is a static part. The first part comprises the first pre-determined text sequence "Please authenticate me with value" and the third part comprises the second pre-determined text sequence "at Anybank".

The requested text may be provided to the user through the web-based portal, for example the requested text may be displayed on-screen. Alternatively, the requested text may be provided to the user via a message, for example SMS, push notification, or WhatsApp for example. Alternatively, the requested text can be converted to an audio signal via a text to speech process, and the audio signal provided to the user in a voice call for example. Part of the requested text can be transmitted to the user on a separate channel. For example, the second part (dynamic part) of the requested text can be transmitted to the user over a separate channel to the rest of the requested text. In this case, an imposter would need to have control of this secondary channel to obtain the correct digits to synthesise in a synthesis based attack for example.

The user then speaks the requested text sequence, and this is captured by the user device as an audio signal in S303. The audio signal is sent from the user device to the service provider system, for example through the web-browser, through an app, through a voice call or by sending a voice message to a specified telephone number. Alternatively, the user device can provide the audio signal directly to the authentication system.

The service provider system generates an authentication request in S304 and transmits the authentication request to the authentication system. For example, an API call may be made from the service provider system to the authentication system. The authentication request comprises information specifying the identity against which the user is to be authenticated, which in this case is the username, and the received audio signal. The authentication request comprising the audio signal is received at the authentication system. The authentication method in the following steps is then performed in order to determine whether the user corresponds to the specified identity. The information might be a username, name or alphanumeric code identifying a registered person for example. The information is used to retrieve the stored voice template associated with the identified person.

The authentication system then performs a step of identifying one or more portions of the audio signal as corresponding to the one or more pre-determined text sequences in S305. In this example, the authentication system identifies a first portion of the audio signal as corresponding to the first pre-determined text sequence and a third portion of the audio signal as corresponding to the second pre-determined text sequence. Various methods of identifying the portions described in relation to S202 above can be used in this step.

The authentication system then performs a step of identifying one or more portions of the audio signal as corresponding to the one or more new text sequences in S306. The remaining portions of the audio signal are identified in S306. In this example, the authentication system identifies a second portion of the audio signal in this step as corresponding to a dynamic portion. The authentication system stores the intended structure of the audio signal, and uses this to determine the static and dynamic portions of the audio.

An authentication process is then performed in S307 at the authentication system in order to verify that the user attempting to access the account corresponds to the registered user identified by the username. The authentication process comprises one or more methods of authentication, all of which must be successful in order to allow the user access to the account. The authentication process comprises performing voice biometric authentication on the second portion of the audio signal. Authentication using voice biometrics can distinguish between the legitimate person and an imposter. The legitimate person is the person who owns the identity corresponding to the username and whose voice is enrolled against that identity. A voice biometric authentication process involves comparing voice information extracted from the speech provided by the user with the enrolled voice information - the voice template. Various other authentication steps may be performed on the audio signal, as described above in relation to S204, such as replay detection and synthesis detection.

One or more additional authentication steps may also be performed by the service provider system itself, or by a further system. For example, the service provider system or a separate system may perform ASR on the audio signal, and compare the output to the one or more new text sequences. In this example, the service provider system or a separate system perform ASR on the audio signal to determine which digits were spoken and in which order. This is then compared to the new text sequence generated in S302. As well as being biometrically assessed, the audio signal is parsed by a speech recognition engine looking for the correct digit combination from the requested text, in this example 87692. For example, a trained speech recognition algorithm based on a neural network or Hidden Markov Model may be used. The ASR output may comprise the most probable text hypothesis corresponding to the audio signal. If the hypothesis does not comprise the one or more new text sequences, the output is an indication that the authentication should fail, for example a 0 value. If the hypothesis does comprise an entry corresponding to the one or more new text sequences, the output is an indication that the check has been successful, for example a 1 value.

In S308, the authentication result is transmitted from the authentication system to the service provider system. On determining that the voice information matches the voice enrolled by the legitimate person, and that any other authentication step required is successful, the user is authenticated and the authentication system informs the service provider system that the user is authenticated. The service provider system then performs the service requested by the user in S309, which in this example comprises allowing access to the account to carry out online transactions, such as electronic money transfers. The service provider system may also transmit a message to the user device indicating that the authentication was successful. If the authentication system determines that the voice information does not match the voice enrolled by the legitimate person, the authentication system informs the service provider system that the user is not authenticated, and the service provider system does not perform the service requested by the user in S309. The service provider system may send a message to the user device indicating that authentication was unsuccessful.

In the above described example, a separate authentication system performs the authentication method. However, in alternative examples, the service provider system itself may perform the authentication method. In this case, steps S305 to S308 are performed by the service provider system.

In the above described first example, the service provider system generates the new text sequence and provides the requested text to the user device. An authentication method is then performed in which the new text sequence is not provided to the authentication system. In a second example however, the new text sequence is provided to the authentication system. For example, the service provider system may provide the new text sequence to the authentication system together with the audio signal for each request. Alternatively, and as described below, the authentication system generates the requested text.

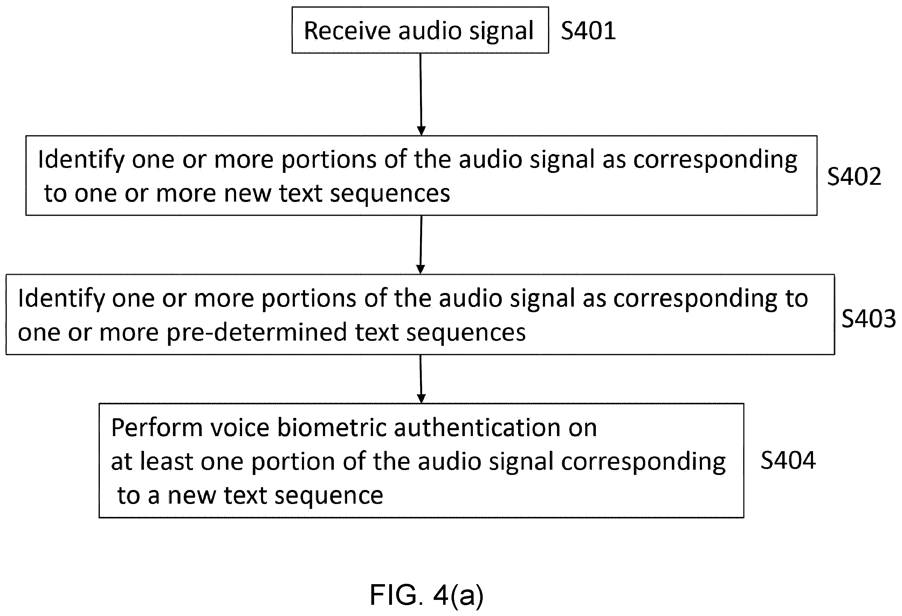

Figure 4(a) is a flow chart illustrating an authentication method according to an embodiment. The authentication method may be performed on a system such as described in relation to Figure 5 for example. The method again uses a plurality of stored templates, also referred to as voice prints, corresponding to registered persons. In this example, the templates are again associated with the text "Please authenticate me with value .... at Anybank" as described previously.

In S401, an audio signal is received, together with information specifying an identity.

In S402, one or more portions of the audio signal are identified as corresponding to one or more new text sequences. In this example, the one or more portions of the audio signal are identified using automatic speech recognition, in which portions of the audio signal in which the text of the one or more new text sequences is spoken are identified. In this example, the new text sequence is text "87692". A speech recognition module is used to listen for the first and last digit. For example, the ASR output may comprise the most probable text hypothesis corresponding to the audio signal, together with timing information corresponding to the point in the audio signal corresponding to the start and end of each word. This hypothesis is parsed to find the first word in the new text sequence, where the first word may correspond to a character in some examples. The start of the second portion is identified as the point in the audio signal identified in the timing information as the start of the first word in the new text sequence, in this case 8. The end of the second portion is the identified as the point in the audio signal identified in the timing information as the end of the last word in the new text sequence, where the last word may correspond to a character in some examples. The speech recognition step performed in S402 indicates where the random element of the spoken text begins and ends in the audio signal, as well as what was spoken.

In this example, the output of the speech recognition processing is also compared against the one or more new text sequences, to ensure that the correct text was spoken. If the ASR hypothesis does not comprise the one or more new text sequences, the authentication system outputs an indication that the authentication should fail, for example a 0 value. If the hypothesis does comprise an entry corresponding to the one or more new text sequences, the output is an indication that this check has been successful, for example a 1 value. In this step, an additional check is performed by the authentication system to ensure the correct digits were spoken. This occurs prior to or simultaneously to the static phrases being analysed in the following steps.

In S403, one or more portions of the audio signal are identified as corresponding to one or more pre-determined text sequences. In this example, a first pre-determined text sequence is "Please authenticate me with value" and a second pre-determined text sequence is "at Anybank". In this example, the first and third portion are identified using a speech recognition based method, as has been described previously. Alternatively, these portions are simply identified as the one or more remaining portions of the audio signal - in this example the portion before the second portion being identified as the first portion and the portion after the second portion being identified as the third portion.

In an alternative example, a time de-limiting approach is used to identify the portions of the audio signal in S402 and S403 for example.

In S404, voice biometric authentication is performed, as described previously in relation to Figure 2(a). In this example, the one or more dynamic portions are identified and analysed first. Voice biometric analysis is performed on the one or more dynamic portions. Speech recognition processing is also performed to ensure that the correct digits were spoken. This can occur prior to or simultaneously to the static phrases being analysed for example.

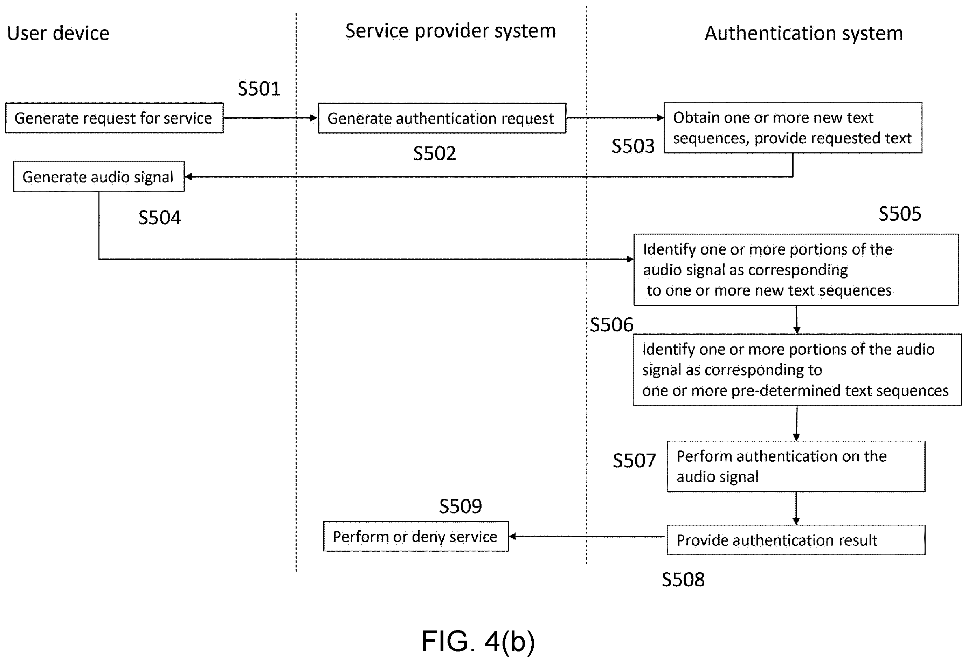

Figure 4(b) is a schematic illustration of a method of authentication according to an embodiment, in which the authentication system generates the requested text. The user is again authenticated prior to providing access to an online banking account.

Again, prior to performance of the method described in relation to Figure 4(b), the user registers with the service provider. During this process, the authentication service provides the service provider with a set of requested phrases "Please authenticate me with value ...... at Anybank", with a different set of digits in the location "....." for each phrase. The service provider then requests the user to speak the phrases. Alternatively, these may be provided directly to the user by the authentication system. The audio signals are transmitted to the service provider from the user device, for example through a web-browser or app, by calling a specified telephone number or by sending a voice message to a specified telephone number. These audio signals are then sent from the service provider to the authentication system together with a username. Alternatively, the user may provide the audio signals directly to the authentication system. The authentication system generates a voice template based on the received set of audio signals, and stores the voice template together with the username, as described previously. The requested text comprises one or more static parts and one or more dynamic parts, as described previously.

In the following method, a user is then authenticated prior to providing access to an online banking account managed by the service provider system, as described previously.

In S501, a request for a service is generated at the user device, as described previously in relation to S301.

The service provider system generates an authentication request in S502 and transmits the authentication request to the authentication system. The authentication request comprises information specifying the identity of the identity against which the user is to be authenticated, which in this case is the username. The authentication request is received at the authentication system.

The authentication system obtains one or more new text sequences, which in this example is a randomly generated sequence of numbers. The authentication system provides a requested text comprising a first part comprising the first pre-determined text sequence, a second part comprising the new text sequence, and a third part comprising the second pre-determined text sequence to the service provider system in S503. The requested text sequence in this example is "Please authenticate me with value 87692 at Anybank". The service provider system receives the requested text and provides the requested text to the user device. The requested text may be provided to the user through the web-based portal. Alternatively, the requested text may be provided to the user via a message, for example SMS, push notification, or WhatsApp for example. Alternatively, the requested text can be converted to an audio signal via a text to speech process, and the audio signal provided to the user in a voice call for example. Part of the requested text can be transmitted to the user on a separate channel. The authentication system may alternatively provide all or part of the requested text directly to the user device for example.

The user then speaks the requested text sequence, and this is captured by the user device as an audio signal in S504. The audio signal is sent from the user device to the service provider system, for example through the web-browser, through an app, through a voice call or by sending a voice message to a specified telephone number. The server provider system sends the audio signal to the authentication system. Alternatively, the user may send the audio signal directly to the authentication system. The audio signal is received at the authentication system.

The authentication system then performs a step of identifying one or more portions of the audio signal corresponding to one or more new text sequences in S505. In this example, the authentication system identifies a second portion of the audio signal as corresponding to the new text sequence in S505, as described in relation to S402 above.

The authentication system then performs a step of identified one or more portions of the audio signal as corresponding to the one or more pre-determined text sequences in S506, as described in relation to S403 above.

An authentication process is then performed in S507 at the authentication system in order to verify that the user attempting to access the account corresponds to the registered user identified by the username. The authentication process comprises one or more methods of authentication, all of which must be successful in order to allow the user access to the account, as described above in relation to S404 for example. As described previously, in this example, the authentication system also performs the speech recognition processing to ensure the correct text was spoken. This could occur prior to or simultaneously to the static phrases being analysed.

In S508, the authentication result is transmitted from the authentication system to the service provider system. On determining that the voice information matches the voice enrolled by the legitimate person, and that any other authentication step required is successful, the user is authenticated and the authentication system informs the service provider system that the user is authenticated. The service provider system then performs the service requested by the user in S509. If the authentication system determines that the voice information does not match the voice enrolled by the legitimate person, the authentication system informs the service provider system that the user is not authenticated, and the service provider system does not perform the service requested by the user in S509.

Although the above described examples relate to authenticating a user in order to provide access to an online banking account, it will be appreciated that the method of authentication may be used in various alternative applications, such as in the field of healthcare for example.

Figure 5 is a schematic illustration of an authentication system 900 in accordance with an embodiment. The authentication system 900 comprises an input 901, a processor 905, working memory comprising RAM 911, an output 903, and long term storage 907.

In this example, the authentication system 900 is a server device. The authentication system 900 receives an input audio signal originating from a user device. As described in relation to Figures 3 and 4 above, the audio signal may be received at the authentication system 900 via a service provider system. The user device comprises a microphone (not shown) which generates an audio signal. The audio signal is transmitted to the authentication system 900 from the user device through a communication network. The user device may be a smart device, which transmits the audio signal via the Internet. The user device may be a telephone, which transmits the audio signal via a telephone network.

The audio signal is received at the input 901 of the authentication system 900. The input 901 is a receiver for receiving data from a communication network, such as the Internet.

The processor 905 accesses the input module 901. The processor 905 is coupled to the storage 907 and also accesses the working memory 911. The processor 905 may comprise logic circuitry that responds to and processes the instructions in code stored in the working memory 911. In particular, when executed, a program 909 is represented as a software product stored in the working memory 911. Execution of the program 909 by the processor 905 causes embodiments as described herein to be implemented. In this way, implementations of the embodiments described herein can be realized using one or more modules of computer program instructions.

The processor 905 is also configured to communicate with the non-volatile storage 907. As illustrated, the storage 907 is local memory that is contained in the authentication system 900. Alternatively however, the storage 907 may be wholly or partly located remotely from the authentication system 900, for example, using cloud based memory that can be accessed remotely via a communication network such as the Internet. The program 909 is stored in the storage 907. The program 909 is placed in working memory when executed, as illustrated in Figure 5.

The processor 905 also accesses the output module 903. The output module 903 provides a response generated by the processor 905 to a communication network such as the Internet. As described in relation to Figures 3 and 4 above, a response generated by the processor 905 may be provided to a service provider system for example. The input and output modules 901, 903 may be a single component or may be divided into a separate input interface 901 and a separate output interface 903.

As illustrated, the system 900 comprises a single processor. However, the program 909 may be executed across multiple processing components, which may be located remotely, for example, using cloud based processing. For example, the authentication system 900 may comprise at least one graphical processing unit (GPU) and a general central processing unit (CPU), where various operations described in relation to the methods above are implemented by the GPU, and other operations are implemented by the CPU.

Usual procedures for the loading of software into memory and the storage of data in the storage unit 907 apply. In particular, the program 909 can be embedded in original equipment, or can be provided, as a whole or in part, after manufacture. For instance, the program 909 can be introduced, as a whole, as a computer program product, which may be in the form of a download, or can be introduced via a computer program storage medium, such as an optical disk. Alternatively, modifications to existing software can be made by an update, or plug-in, to provide features of the described embodiments.

In the above described example, the authentication system 900 comprises a server device which receives an audio signal originating from a user device. However, alternatively, the authentication system 900 may be an end-user computer device, such as a laptop, tablet, smartwatch, or smartphone. In some examples, the program 909 is executed on the same device which records the sound. In such an authentication system 900, the input module 901 comprises a microphone. The output module 903 provides the response generated by the processor 905 to an output such as a speaker or a screen. The output may comprise an audible message that is played on a speaker, or a message that is displayed to the user on a screen. It will also be appreciated that in some the examples, parts of the program 909 may be executed on a user device whilst other parts of the program may be executed on a server device, with data being transmitted between the two devices.

While it will be appreciated that the embodiments described herein could be implemented using any computing system, the example authentication system 900 illustrated in Figure 5 provides means capable of putting an embodiment, as described herein, into effect. For example, the authentication system in Figure 5 may perform the method of Figure 2(a) or Figure 4(a). In use, the authentication system 900 receives, by way of input 901, an audio file. The program 909, executed on processor 905, performs an authentication method and provides an output in the manner described with reference to the above figures. The authentication method comprises performing a voice biometric based authentication. Voice biometric engines can distinguish between a legitimate person, being the person who owns the claimed identity and whose voice was enrolled against that identity, and an imposter. The authentication method is concerned with independent evaluations of one or more components of a phrase. The system 900 outputs data by way of the output 903.

Although the labels "first", "second" and "third" are used throughout, these labels do not imply any order, and are used merely to distinguish.

While certain embodiments have been described, these embodiments have been presented by way of example only and are not intended to limit the scope of the invention. The invention is specified in the appended claims

## Claims

1. A computer implemented method, comprising:
receiving (S201) a first audio signal;
identifying (S202) one or more portions (100, 102) of the first audio signal as corresponding to one or more pre-determined text sequences;
identifying (S203) one or more portions (101) of the first audio signal as corresponding to one or more new text sequences;
performing (S204) a voice authentication on a first portion of the first audio signal identified as corresponding to a first pre-determined text sequence and performing a separate voice authentication on a second portion of the first audio signal identified as corresponding to a new text sequence;
performing a determination as to whether speech in the first portion of the first audio signal is generated by replaying a recording or performing a determination as to whether speech in the first portion of the first audio signal is computer-generated; and
performing a separate determination as to whether speech in the second portion of the first audio signal is generated by replaying a recording or performing a separate determination as to whether speech in the second portion of the first audio signal is computer-generated.

2. The method according to claim 1, wherein the voice authentication performed on the first portion uses a stored voice template, and wherein the stored voice template corresponds to the first pre-determined text sequence.

3. The method according to claim 2, wherein identifying the first portion comprises:
performing an automatic speech recognition process taking the first audio signal as input and generating output text;
identifying a part of the output text comprising the first pre-determined text sequence;
identifying a portion of the first audio signal corresponding to the part of the output text as the first portion.

4. The method according to any preceding claim, wherein identifying the one or more portions of the first audio signal as corresponding to one or more new text sequences comprises selecting one or more remaining portions of the first audio signal after the identification of one or more portions of the first audio signal as corresponding to the one or more pre-determined text sequences.

5. The method according to any preceding claim, further comprising:
obtaining a first new text sequence;
performing an automatic speech recognition process taking the first audio signal as input and generating output text; and
performing a determination as to whether the output text comprises the first new text sequence.

6. The method according to claim 1, further comprising:
receiving a first authentication request;
obtaining a first new text sequence in response to the received first authentication request; and
providing a first requested text, the first requested text comprising the first new text sequence.

7. The method according to claim 6, further comprising:
receiving a second authentication request;
obtaining (S503) a second new text sequence in response to the received second authentication request, wherein the second new text sequence is different to the first new text sequence;
providing a second requested text, the second requested text comprising the second new text sequence;
receiving a second audio signal;
identifying (S505) one or more portions of the second audio signal as corresponding to the one or more pre-determined text sequences;
identifying (S506) a second portion of the first audio signal as corresponding to the second new text sequence; and
performing (S507) a voice authentication on a first portion of the first audio signal identified as corresponding to the first pre-determined text sequence and performing a separate voice authentication on the second portion of the first audio signal.

8. The method according to claim 6 or 7, wherein the first pre-determined text sequence comprises more syllables than the first new text sequence.

9. The method according to any of claims 6 to 8, wherein the first authentication request identifies a stored voice template, the method further comprising:
retrieving the first pre-determined text sequence, wherein the first pre-determined text sequence corresponds to the stored voice template, wherein the first requested text further comprises the first pre-determined text sequence.

10. The method according to claim 1, wherein the one or more portions are identified as corresponding to the one or more pre-determined text sequences using one or more time periods corresponding to an expected time for speaking the one or more pre-determined text sequences.

11. A computer readable medium comprising computer executable instructions that when executed by a computer will cause the computer to carry out a method according to any one of claims 1 to 10.

12. An authentication system (900), comprising:
one or more processors (905), the one or more processors configured to:
receive a first audio signal;
identify one or more portions of the first audio signal as corresponding to one or more pre-determined text sequences;
identify one or more portions of the first audio signal as corresponding to one or more new text sequences;
perform a voice authentication on a first portion of the first audio signal identified as corresponding to a first pre-determined text sequence and perform a separate voice authentication on a second portion of the first audio signal identified as corresponding to a new text sequence;
perform a determination as to whether speech in the first portion of the first audio signal is generated by replaying a recording or perform a determination as to whether speech in the first portion of the first audio signal is computer-generated; and
perform a separate determination as to whether speech in the second portion of the first audio signal is generated by replaying a recording or perform a separate determination as to whether speech in the second portion of the first audio signal is computer-generated..

## Patentansprüche

1. Computerimplementiertes Verfahren, umfassend:
Empfangen (S201) eines ersten Audiosignals;
Identifizieren (S202) eines oder mehrerer Abschnitte (100, 102) des ersten Audiosignals als einer oder mehreren vorbestimmten Textsequenzen entsprechend;
Identifizieren (S203) eines oder mehrerer Abschnitte (101) des ersten Audiosignals als einer oder mehreren neuen Textsequenzen entsprechend;
Durchführen (S204) einer Sprachauthentifizierung an einem ersten Abschnitt des ersten Audiosignals, der als einer ersten vorbestimmten Textsequenz entsprechend identifiziert ist, und Durchführen einer separaten Sprachauthentifizierung an einem zweiten Abschnitt des ersten Audiosignals, der als einer neuen Textsequenz entsprechend identifiziert ist;
Durchführen einer Bestimmung, ob Sprache im ersten Abschnitt des ersten Audiosignals durch Abspielen einer Aufnahme generiert wird, oder Durchführen einer Bestimmung, ob Sprache im ersten Abschnitt des ersten Audiosignals computergeneriert ist; und
Durchführen einer separaten Bestimmung, ob Sprache im zweiten Abschnitt des ersten Audiosignals durch Abspielen einer Aufnahme generiert wird, oder Durchführen einer separaten Bestimmung, ob Sprache im zweiten Abschnitt des ersten Audiosignals computergeneriert ist.

2. Verfahren nach Anspruch 1, wobei die Sprachauthentifizierung, die an dem ersten Abschnitt durchgeführt wird, eine gespeicherte Sprachvorlage verwendet und wobei die gespeicherte Sprachvorlage der ersten vorbestimmten Textsequenz entspricht.

3. Verfahren nach Anspruch 2, wobei Identifizieren des ersten Abschnitts umfasst:
Durchführen eines automatischen Spracherkennungsprozesses, bei dem das erste Audiosignal als Eingabe dient, und Generieren eines Ausgabetextes;
Identifizieren eines Teils des Ausgabetextes, der die erste vorbestimmte Textsequenz umfasst;
Identifizieren eines Abschnitts des ersten Audiosignals, der dem Teil des Ausgabetextes entspricht, als den ersten Abschnitt.

4. Verfahren nach einem vorstehenden Anspruch, wobei Identifizieren des einen oder der mehreren Abschnitte des ersten Audiosignals als einer oder mehreren neuen Textsequenzen entsprechend, Auswählen eines oder mehrerer verbleibender Abschnitte des ersten Audiosignals nach der Identifizierung eines oder mehrerer Abschnitte des ersten Audiosignals als der einen oder den mehreren vorbestimmten Textsequenzen entsprechend umfasst.

5. Verfahren nach einem vorstehenden Anspruch, weiter umfassend:
Erhalten einer ersten neuen Textsequenz;
Durchführen eines automatischen Spracherkennungsprozesses, bei dem das erste Audiosignal als Eingabe dient, und Generieren eines Ausgabetextes; und
Durchführen einer Bestimmung, ob der Ausgabetext die erste neue Textsequenz umfasst.

6. Verfahren nach Anspruch 1, weiter umfassend:
Empfangen einer ersten Authentifizierungsanforderung;
Erhalten einer ersten neuen Textsequenz als Antwort auf die empfangene erste Authentifizierungsanforderung; und
Bereitstellen eines ersten angeforderten Textes, wobei der erste angeforderte Text die erste neue Textsequenz umfasst.

7. Verfahren nach Anspruch 6, weiter umfassend:
Empfangen einer zweiten Authentifizierungsanforderung;
Erhalten (S503) einer zweiten neuen Textsequenz als Antwort auf die empfangene zweite Authentifizierungsanforderung, wobei sich die zweite neue Textsequenz von der ersten neuen Textsequenz unterscheidet;
Bereitstellen eines zweiten angeforderten Textes, wobei der zweite angeforderte Text die zweite neue Textsequenz umfasst;
Empfangen eines zweiten Audiosignals;
Identifizieren (S505) eines oder mehrerer Abschnitte des zweiten Audiosignals als der einen oder den mehreren vorbestimmten Textsequenzen entsprechend;
Identifizieren (S506) eines zweiten Abschnitts des ersten Audiosignals als der zweiten neuen Textsequenz entsprechend; und
Durchführen (S507) einer Sprachauthentifizierung an einem ersten Abschnitt des ersten Audiosignals, der als der ersten vorbestimmten Textsequenz entsprechend identifiziert ist, und Durchführen einer separaten Sprachauthentifizierung an dem zweiten Abschnitt des ersten Audiosignals.

8. Verfahren nach Anspruch 6 oder 7, wobei die erste vorbestimmte Textsequenz mehr Silben umfasst als die erste neue Textsequenz.

9. Verfahren nach einem der Ansprüche 6 bis 8, wobei die erste Authentifizierungsanforderung eine gespeicherte Sprachvorlage identifiziert, wobei das Verfahren weiter umfasst:
Abrufen der ersten vorbestimmten Textsequenz, wobei die erste vorbestimmte Textsequenz der gespeicherten Sprachvorlage entspricht, wobei der erste angeforderte Text weiter die erste vorbestimmte Textsequenz umfasst.

10. Verfahren nach Anspruch 1, wobei der eine oder die mehreren Abschnitte als der einen oder den mehreren vorbestimmten Textsequenzen entsprechend identifiziert sind, indem ein oder mehrere Zeiträume verwendet werden, die einer erwarteten Zeit zum Sprechen der einen oder mehreren vorbestimmten Textsequenzen entsprechen.

11. Computerlesbares Medium, das computerausführbare Anweisungen umfasst, die, wenn sie von einem Computer ausgeführt werden, den Computer veranlassen werden, ein Verfahren nach einem der Ansprüche 1 bis 10 auszuführen.

12. Authentifizierungssystem (900), umfassend:
einen oder mehrere Prozessoren (905), wobei der eine oder die mehreren Prozessoren konfiguriert sind:
ein erstes Audiosignal zu empfangen;
einen oder mehrere Abschnitte des ersten Audiosignals als einer oder mehreren vorbestimmten Textsequenzen entsprechend zu identifizieren;
einen oder mehrere Abschnitte des ersten Audiosignals als einer oder mehreren neuen Textsequenzen entsprechend zu identifizieren;
eine Sprachauthentifizierung an einem ersten Abschnitt des ersten Audiosignals durchzuführen, der als einer ersten vorbestimmten Textsequenz entsprechend identifiziert ist, und eine separate Sprachauthentifizierung an einem zweiten Abschnitt des ersten Audiosignals durchzuführen, der als einer neuen Textsequenz entsprechend identifiziert ist;
eine Bestimmung durchzuführen, ob Sprache im ersten Abschnitt des ersten Audiosignals durch Abspielen einer Aufnahme generiert wird, oder eine Bestimmung durchzuführen, ob Sprache im ersten Abschnitt des ersten Audiosignals computergeneriert ist; und
eine separate Bestimmung durchzuführen, ob Sprache im zweiten Abschnitt des ersten Audiosignals durch Abspielen einer Aufnahme generiert wird, oder eine separate Bestimmung durchzuführen, ob Sprache im zweiten Abschnitt des ersten Audiosignals computergeneriert ist.

## Revendications

1. Procédé mis en œuvre par ordinateur, comprenant :
la réception (S201) d'un premier signal audio ;
l'identification (S202) d'une ou plusieurs portions (100, 102) du premier signal audio comme correspondant à une ou plusieurs séquences de texte prédéterminées ;
l'identification (S203) d'une ou plusieurs portions (101) du premier signal audio comme correspondant à une ou plusieurs nouvelles séquences de texte ;
la réalisation (S204) d'une authentification vocale sur une première portion du premier signal audio identifié comme correspondant à une première séquence de texte prédéterminée et la réalisation d'une authentification vocale distincte sur une seconde portion du premier signal audio identifié comme correspondant à une nouvelle séquence de texte ;
la réalisation d'une détermination visant à savoir si la parole contenue dans la première portion du premier signal audio est générée par la relecture d'un enregistrement ou la réalisation d'une détermination visant à savoir si la parole contenue dans la première portion du premier signal audio est générée par ordinateur ; et
la réalisation d'une détermination distincte pour déterminer si la parole dans la seconde portion du premier signal audio est générée par la relecture d'un enregistrement ou la réalisation d'une détermination distincte pour déterminer si la parole dans la seconde portion du premier signal audio est générée par ordinateur.

2. Procédé selon la revendication 1, dans lequel l'authentification vocale effectuée sur la première portion utilise un modèle vocal stocké, et dans lequel le modèle vocal stocké correspond à la première séquence de texte prédéterminée.

3. Procédé selon la revendication 2, dans lequel l'identification de la première portion comprend :
la réalisation d'un processus de reconnaissance vocale automatique prenant le premier signal audio comme entrée et générant du texte en sortie ;
l'identification d'une partie du texte de sortie constituant la première séquence de texte prédéterminée ;
l'identification d'une portion du premier signal audio correspondant à la partie du texte de sortie comme étant la première portion.

4. Procédé selon une quelconque revendication précédente, dans lequel l'identification des une ou plusieurs portions du premier signal audio comme correspondant à une ou plusieurs nouvelles séquences de texte comprend la sélection d'une ou plusieurs portions restantes du premier signal audio après l'identification des une ou plusieurs portions du premier signal audio comme correspondant à une ou plusieurs séquences de texte prédéterminées.

5. Procédé selon une quelconque revendication précédente, comprenant en outre :
l'obtention d'une première nouvelle séquence de texte ;
la réalisation d'un processus de reconnaissance vocale automatique prenant le premier signal audio en entrée et générant du texte en sortie ; et
la réalisation d'une détermination permettant de déterminer si le texte de sortie constitue la première nouvelle séquence de texte.

6. Procédé selon la revendication 1, comprenant en outre :
la réception d'une première demande d'authentification ;
l'obtention d'une première nouvelle séquence de texte en réponse à la première requête d'authentification reçue ; et
la fourniture d'un premier texte demandé, ce premier texte demandé constituant la première nouvelle séquence de texte.

7. Procédé selon la revendication 6, comprenant en outre :
la réception d'une seconde demande d'authentification ;
l'obtention (S503) d'une seconde nouvelle séquence de texte en réponse à la seconde demande d'authentification reçue, dans laquelle la seconde nouvelle séquence de texte est différente de la première nouvelle séquence de texte ;
la fourniture d'un second texte demandé, ce second texte demandé constituant la seconde nouvelle séquence de texte ;
la réception d'un second signal audio ;
l'identification (S505) d'une ou plusieurs portions du second signal audio comme correspondant à une ou plusieurs séquences de texte prédéterminées ;
l'identification (S506) d'une seconde portion du premier signal audio comme correspondant à la seconde nouvelle séquence de texte ; et
la réalisation (S507) d'une authentification vocale sur une première portion du premier signal audio identifié comme correspondant à la première séquence de texte prédéterminée et la réalisation d'une authentification vocale distincte sur la seconde portion du premier signal audio.

8. Procédé selon la revendication 6 ou 7, dans lequel la première séquence de texte prédéterminée comprend plus de syllabes que la première nouvelle séquence de texte.

9. Procédé selon l'une quelconque des revendications 6 à 8, dans lequel la première requête d'authentification identifie un modèle vocal enregistré, le procédé comprenant en outre :
la récupération de la première séquence de texte prédéterminée, dans lequel la première séquence de texte prédéterminée correspond au modèle vocal enregistré, dans lequel le premier texte demandé comprend en outre la première séquence de texte prédéterminée.

10. Procédé selon la revendication 1, dans lequel la ou les portions sont identifiées comme correspondant à la ou aux séquences de texte prédéterminées en utilisant une ou plusieurs périodes de temps correspondant à un temps prévu pour prononcer la ou les séquences de texte prédéterminées.

11. Support lisible par ordinateur comprenant des instructions exécutables par ordinateur qui, lorsqu'elles sont exécutées par un ordinateur, amèneront ledit ordinateur à réaliser un procédé selon l'une quelconque des revendications 1 à 10.

12. Système d'authentification (900), comprenant :
un ou plusieurs processeurs (905), le ou les processeurs étant configurés pour :
recevoir un premier signal audio ;
identifier une ou plusieurs portions du premier signal audio correspondant à une ou plusieurs séquences de texte prédéterminées ;
identifier une ou plusieurs portions du premier signal audio correspondant à une ou plusieurs nouvelles séquences de texte ;
effectuer une authentification vocale sur une première portion du premier signal audio identifié comme correspondant à une première séquence de texte prédéterminée et effectuer une authentification vocale distincte sur une seconde portion du premier signal audio identifié comme correspondant à une nouvelle séquence de texte ;
déterminer si la parole contenue dans la première portion du premier signal audio est générée par la relecture d'un enregistrement ou si elle est générée par ordinateur ;
procéder à une détermination distincte afin de déterminer si la parole dans la seconde portion du premier signal audio est générée par la relecture d'un enregistrement ou si la parole dans la seconde portion du premier signal audio est générée par ordinateur.
